(19) Europäisches Patentamt / European Patent Office / Office européen des brevets

(11) **EP 2 940 960 B1**

(12) **FASCICULE DE BREVET EUROPEEN**

(45) Date de publication et mention de la délivrance du brevet:
**01.04.2020 Bulletin 2020/14**

(51) Int Cl.:
***H04L 29/06*** *(2006.01)*

(21) Numéro de dépôt: **15150092.3**

(22) Date de dépôt: **15.11.2005**

(54) **PROCÉDÉ ET DISPOSITIF D'ORDONNANCEMENT DE PAQUETS POUR LEUR ROUTAGE DANS UN RÉSEAU AVEC DÉTERMINATION IMPLICITE DES PAQUETS À TRAITER EN PRIORITÉ**

**VERFAHREN UND VORRICHTUNG ZUM ORDNEN VON DATENPAKETEN FÜR IHR ROUTING IN EINEM NETZ MIT IMPLIZITER BESTIMMUNG DER PAKETE, DIE VORRANGIG ZU VERARBEITEN SIND**

**METHOD AND DEVICE FOR SCHEDULING PACKETS TO BE ROUTED IN A NETWORK WITH IMPLICIT DETERMINATION OF THE PACKETS TO BE GIVEN PRIORITY TREATMENT**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.11.2004 FR 0412063**

(43) Date de publication de la demande:
**04.11.2015 Bulletin 2015/45**

(62) Numéro(s) de document de la (des) demande(s) initiale(s) en application de l'article 76 CBE:
**05819159.4 / 1 813 081**

(73) Titulaire: **Orange**
**75015 Paris (FR)**

(72) Inventeurs:
• **Roberts, James**
**78960 Voisins le Bretonneux (FR)**
• **Oueslati, Sara**
**92320 Chatillon (FR)**
• **Kortebi, Abdesselem**
**22700 Perros Guirec (FR)**

(56) Documents cités:

• **TSAO S-C ET AL: "Pre-order Deficit Round Robin: a new scheduling algorithm for packet-switched networks", COMPUTER NETWORKS, ELSEVIER SCIENCE PUBLISHERS B.V., AMSTERDAM, NL, vol. 35, no. 2-3, février 2001 (2001-02), pages 287-305, XP004304846, ISSN: 1389-1286**
• **KANHERE S S ET AL: "Fair, efficient and low-latency packet scheduling using nested deficit round robin", HIGH PERFORMANCE SWITCHING AND ROUTING, 2001 IEEE WORKSHOP ON 29-31 MAY 2001, PISCATAWAY, NJ, USA,IEEE, 29 mai 2001 (2001-05-29), pages 6-10, XP010542761, ISBN: 0-7803-6711-1**
• **MACGREGOR M H ET AL: "Deficits for bursty latency-critical flows: DRR++", NETWORKS, 2000. (ICON 2000). PROCEEDINGS. IEEE INTERNATIONAL CONFERENCE ON SEPTEMBER 5-8, 2000, PISCATAWAY, NJ, USA,IEEE, 5 septembre 2000 (2000-09-05), pages 287-293, XP010514114, ISBN: 0-7695-0777-8**
• **S. BEN FREDJ, S. OUESLATI-BOULAHIA AND J.W. ROBERTS: "Measurement-based Admission Control for Elastic Traffic", ITC17, décembre 2001 (2001-12), XP002332468, SALVADOR, BRAZIL**
• **SHREEDHAR M ET AL: "EFFICIENT FAIR QUEUING USING DEFICIT ROUND-ROBIN", IEEE / ACM TRANSACTIONS ON NETWORKING, IEEE INC. NEW YORK, US, vol. 4, no. 3, 1 juin 1996 (1996-06-01), pages 375-385, XP000591077, ISSN: 1063-6692**

**EP 2 940 960 B1**

**Description**

**Arrière-plan de l'invention**

L'invention concerne le domaine de l'architecture de réseaux de télécommunications.

Elle vise plus particulièrement, un procédé, un dispositif d'ordonnancement, et un routeur de paquets de données multiservices visant à améliorer la qualité du service d'acheminement de paquets de données multiservices compris dans différents flots de ce réseau, de faible complexité.

Elle s'applique en particulier au réseau Internet.

La notion de « flot » utilisée dans ce document est par exemple celle de l'architecture « flow-aware » exposée dans l'article de Bonald et al. « P traffic and QoS control : the need for a flow-aware architecture », World Telecom Conférence, Paris, 2002.

L'internet est à vocation multiservices et appelé à fournir le support pour une large gamme de services et d'applications. On distingue deux grandes classes de trafic dans ce réseau le trafic temps réel (ou trafic « streaming ») produit en général par les applications audio ou vidéo, et le trafic de données (ou trafic élastique) correspondant au transfert de documents numériques. Le trafic temps réel a des exigences de qualité de service correspondant au besoin de conservation du signal - les variations de débit qui caractérisent le signal produit par la source doivent être préservées lorsque le signal traverse le réseau. La qualité de service du trafic de données se mesure par le temps de transfert des documents. Ce temps, ou de manière équivalente le débit moyen réalisé lors du transfert, dépend de toute la chaîne de communication de la source à la destination. Un objectif de qualité de service pour un réseau internet pourrait être de paraître transparent au trafic de données en n'introduisant pas de réduction de débit supplémentaire par rapport aux limitations introduites ailleurs (serveur, réseaux d'accès, équipement de l'utilisateur); dans ce sens le réseau assure la conservation du débit des flots de données.

Le réseau Internet public offre un service de transport à des clients utilisateurs dans un contexte commercial. La question de la tarification est donc importante. L'architecture de réseau doit permettre un retour sur investissement pour l'opérateur avec des prix compétitifs pour les services de qualité demandés par les utilisateurs.

On connaît une méthode d'ordonnancement de faible complexité (de l'ordre O(1), c'est-à-dire indépendante du nombre de flots) baptisée DRR (pour « Déficit Round Robin »), et décrite par M. SHREEDHAR et G. VARGHESE : « Efficient fair queuing using Déficit round robin »,IEEE/ACM Transactions on Networking, Volume :4, Issue :3, June 1996, pages 375-385.

La méthode DRR est une méthode d'ordonnancement basée sur le traitement des flots de manière cyclique, selon le principe « round robin ». Cette méthode associe une file d'attente à chaque flot, chacune de ces files d'attente, traitées cycliquement, étant autorisée à émettre, par cycle, des paquets jusqu'à hauteur d'un quota (quantité de données, par exemple mesurée en octets).

Cette méthode DRR permet d'avoir un degré d'équité raisonnable grâce au maintien d'un compteur de déficit qui permet de compenser la différence éventuelle de taille des paquets des différents flots.

Des variantes de la méthode DRR ont permis d'associer un traitement prioritaire aux paquets de certains flots.

En particulier, la méthode DRR+, décrite dans l'article précité, permet de traiter en priorité les flots sensibles au délai, au détriment des flots « best effort ». Dans cette méthode, les flots prioritaires doivent respecter un contrat, à savoir ne pas émettre plus d'un certain volume de données pendant une période de temps prédéterminée.

L'article « Pre-Order Decifit Round Robin : a new scheduling algorithm for packet-switched networks", COMPUTER NETWORKS, ELSEVIER SCIENCE PUBLISHERS B.V., AMSTERDAM NL, vol. 35, n°2-3, février 2001, propose également un procédé d'ordonnancement de paquets appartenant à différents flots, reposant sur cette même méthode de DRR.

Le document FR2854296 de la demanderesse propose une méthode d'ordonnancement avec différenciation implicite des paquets à traiter en priorité, et permettant en conséquence de s'affranchir avantageusement de ce type de contrat. Mais la méthode d'ordonnancement décrite dans ce document, de type « self-clock fair queuing » est en ordre O(log n), n étant le nombre de flots à prendre en compte, ce qui peut apparaître comme une limitation pour son implémentation dans certains types de routeurs.

L'invention vise à résoudre les inconvénients précédents.

Objet et résumé de l'invention

A cet effet, et selon un premier aspect, elle concerne un procédé d'ordonnancement de paquets appartenant à différents flots selon la revendication 1. Corrélativement, l'invention concerne aussi un dispositif d'ordonnancement de paquets appartenant à différents flots selon la revendication 4. Les revendications dépendantes décrivent des modes de réalisation préférés.

Ainsi, l'ordonnancement selon l'invention se distingue de ceux de l'état de la technique connue à ce jour, en ce qu'il réalise une distinction de la priorité des flots en fonction de leurs caractéristiques intrinsèques de débit, et non en fonction d'un contrat ou d'une attribution externe d'un niveau de priorité associée aux paquets ou aux flots, tout en gardant une complexité indépendante du nombre de flots.

Le dispositif et le procédé d'ordonnancement ordonnent les paquets dans une file d'attente, selon un algorithme de partage équitable avec priorité.

Un ordonnancement de type « partage équitable avec priorité » permet de donner priorité aux paquets des flots dont le débit est inférieur à un seuil dynamique. Ce seuil correspond au débit que réaliserait un flot qui aurait toujours des paquets à émettre.

Avantageusement, ce procédé et ce dispositif d'ordonnancement s'appuient sur la méthode d'ordonnancement DRR susmentionnée.

Dans un mode particulier de réalisation, le procédé d'ordonnancement selon l'invention comporte en outre une étape de mesure de compteurs de congestion destinés à être traités pour le calcul d'estimateurs de congestion utilisés pour un contrôle d'admission. Ces estimateurs de congestion peuvent notamment servir pour un contrôle d'admission en cœur de réseau.

Dans un mode particulier de réalisation, ces estimateurs (ou paramètres) de congestion sont constitués par :

- une valeur de débit équitable, qui est une mesure de débit que réaliserait un flot de données qui aurait toujours des paquets à émettre ; et
- une valeur de charge prioritaire, correspondant au volume desdits paquets prioritaires, transmis pendant un intervalle de temps, divisé par la durée de cet intervalle.

Selon un deuxième aspect, l'invention vise aussi un routeur de paquets comportant un dispositif d'ordonnancement tel que mentionné ci- dessus, et un module de contrôle d'admission des paquets en fonction des paramètres de congestion mesurés par le dispositif d'ordonnancement.

Dans un mode particulier de réalisation, le module d'admission est en outre adapté à acheminer directement les paquets appartenant à des flots dits protégés, à savoir les flots pour lesquels au moins un paquet a été reçu par ledit module d'admission depuis un intervalle de temps prédéterminé.

Un tel dispositif ou procédé peut fonctionner, sans moyens de contrôle d'admission, notamment dans le cadre d'un réseau d'accès où le risque de congestion est davantage maîtrisable qu'en cœur de réseau.

Dans un mode particulier de réalisation, les étapes du procédé d'ordonnancement sont exécutées par un ordinateur sous la commande d'instructions d'un programme informatique. Par conséquent, l'invention concerne également un programme d'ordinateur stocké sur un support d'informations, ce programme comportant des instructions permettant la mise en œuvre d'un procédé d'ordonnancement tel que mentionné ci-dessus, lorsque ce programme est chargé et exécuté par un système informatique.

L'invention vise aussi un support d'informations lisible par un système informatique, éventuellement totalement ou partiellement amovible, notamment CD-ROM ou support magnétique, tel un disque dur ou une disquette, ou support transmissible, tel un signal électrique ou optique, caractérisé en ce qu'il comporte des instructions d'un programme d'ordinateur permettant la mise en œuvre d'un procédé d'ordonnancement tel que mentionné ci-dessus, lorsque ce programme est chargé et exécuté par un système informatique.

Les avantages particuliers du dispositif d'ordonnancement, du routeur, du support d'informations, et du programme d'ordinateur étant identiques à ceux du procédé d'ordonnancement mentionné précédemment, ils ne seront pas rappelés ici.

**Brève description des dessins**

D'autres aspects et avantages de la présente invention apparaîtront plus clairement à la lecture de la description des modes particuliers de réalisation qui vont suivre, cette description étant donnée uniquement à titre d'exemple non limitatif et faite en référence aux dessins annexés sur lesquels :

- la figure 1 représente, sous forme d'organigramme, les principales étapes d'un opérateur de mise en file dans un procédé d'ordonnancement conforme à l'invention, dans un mode particulier de réalisation ;
- la figure 2 représente, sous forme d'organigramme, les principales étapes d'un opérateur d'extraction de file dans un procédé d'ordonnancement conforme à l'invention, dans un mode particulier de réalisation ;
- les figures 3A à 3F représentent un exemple de fonctionnement du procédé d'ordonnancement des figures 1 et 2 ;
- la figure 4 représente un dispositif d'ordonnancement conforme à l'invention dans un mode particulier de réalisation ; et
- la figure 5 représente un dispositif de traitement de paquets conforme à l'invention dans un mode particulier de réalisation.

**Description détaillée d'un mode de réalisation**

Nous allons maintenant décrire un procédé d'ordonnancement conforme à l'invention dans un mode particulier de réalisation. Dans l'exemple décrit ici, ce procédé d'ordonnancement est mis en œuvre par un programme informatique PROG_ORD.

Conformément à l'invention, ce procédé d'ordonnancement est un procédé de type DRR, modifié afin de permettre un traitement prioritaire aux paquets des flots dont le débit ne dépasse pas le débit équitable.

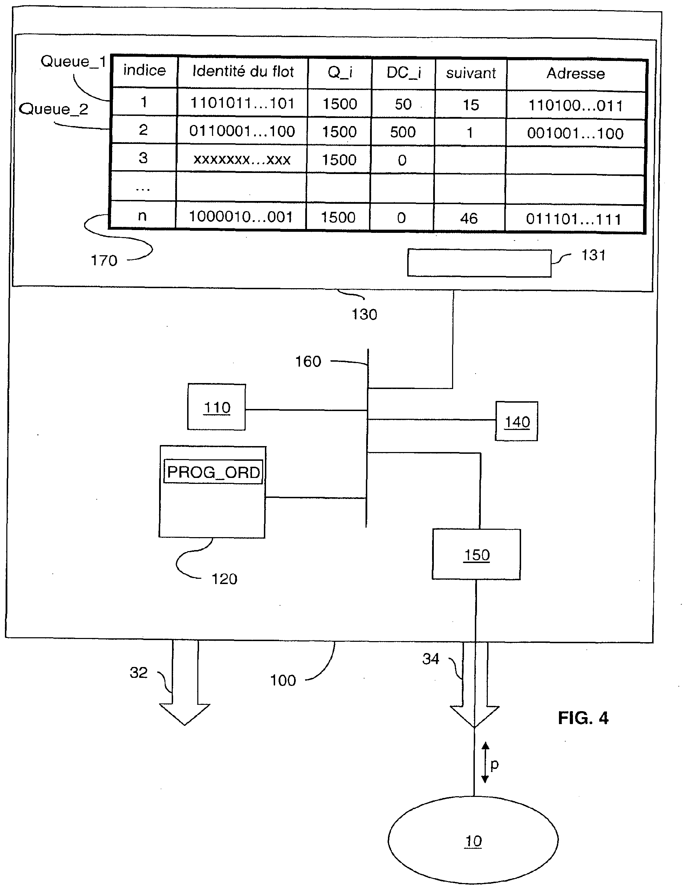

Dans le mode particulier de réalisation décrit ici, ce procédé d'ordonnancement permet en outre de réaliser des mesures de congestion nécessaires à un module de contrôle d'admission décrit ultérieurement en référence à la figure 4.

On supposera par la suite que le procédé d'ordonnancement traite des paquets p, appartenant à des flots d'indice i.

Dans le mode particulier de réalisation décrit ici, le procédé d'ordonnancement selon l'invention utilise des files d'attente différentes Queue_i pour mémoriser les paquets p de chacun des flots actifs i.

On notera que le procédé d'ordonnancement selon l'invention permet un quota $Q\_i$ différent par flot i, bien que l'application envisagée de différenciation implicite de qualité de service suppose que les quotas $Q\_i$ soient identiques et égaux à la taille maximale d'un paquet MTU (Maximum Transfert Unit).

Quoi qu'il en soit, le quota $Q\_i$ est supérieur ou égal à la taille maximale MTU.

Dans l'exemple détaillé décrit ici, ces files d'attente sont numérotées de 1 à n, n étant le nombre maximal de flots actifs.

Le procédé d'ordonnancement décrit ici utilise en outre une file d'attente supplémentaire réservée à un flot fictif destiné à la mesure du débit équitable, le débit équitable devant être entendu comme le débit que réaliserait un flot de données qui aurait en permanence des paquets à émettre.

Conformément à l'invention, le procédé d'ordonnancement utilise également une file d'attente prioritaire PQ pour servir les paquets déterminés prioritaires en fonction des caractéristiques intrinsèques du débit des flots auxquels ils appartiennent.

Dans la suite de la description on distinguera les files d'attente « réelles » (PQ, Queue_1, ..., Queue_n) de la file d'attente « fictive » pour la mesure du débit équitable.

Les files d'attente réelles sont toutes des files d'attente du type FIFO (first in first out) connu de l'homme du métier.

Le procédé d'ordonnancement selon l'invention décrit ici utilise également une liste des flots actifs ActiveList, et deux opérateurs, InsertActiveList() et RemoveActiveList(), respectivement adaptés à ajouter un indice de flot à la fin de la liste des flots actifs ActiveList et à enlever un indice de flot de cette liste.

Ce procédé d'ordonnancement utilise également une fonction FreeBuffer() adaptée à libérer une place mémoire en rejetant le paquet situé à la tête de la file d'attente Queue_i la plus longue, selon la méthode décrite dans « Stochastic Fairness Queueing », P. McKenney, Internetworking : Research and Experience, Vol. 2, jan. 1991, pp 113-131.

D'autres stratégies de libération de la mémoire qui veillent à préserver l'équité entre les flots peuvent aussi être utilisées.

Comme dans la plupart des procédés d'ordonnancement connus, le procédé d'ordonnancement selon l'invention décrit ici utilise principalement deux opérateurs standards de manipulation de files d'attente :

- un opérateur InsertInQueue() d'insertion d'un paquet en fin de file ;
- un opérateur RemoveFromQueue() adapté à retourner l'élément en tête de la file.

Au cours d'une étape préliminaire d'initialisation, le programme d'ordonnancement PROG_ORD initialise les compteurs de déficit $DC\_i$ à 0 pour toutes les files d'attente Queue_i, et insère, dans la liste de flots actifs ActiveList l'indice 0 correspondant au flot fictif pour la mesure du débit équitable.

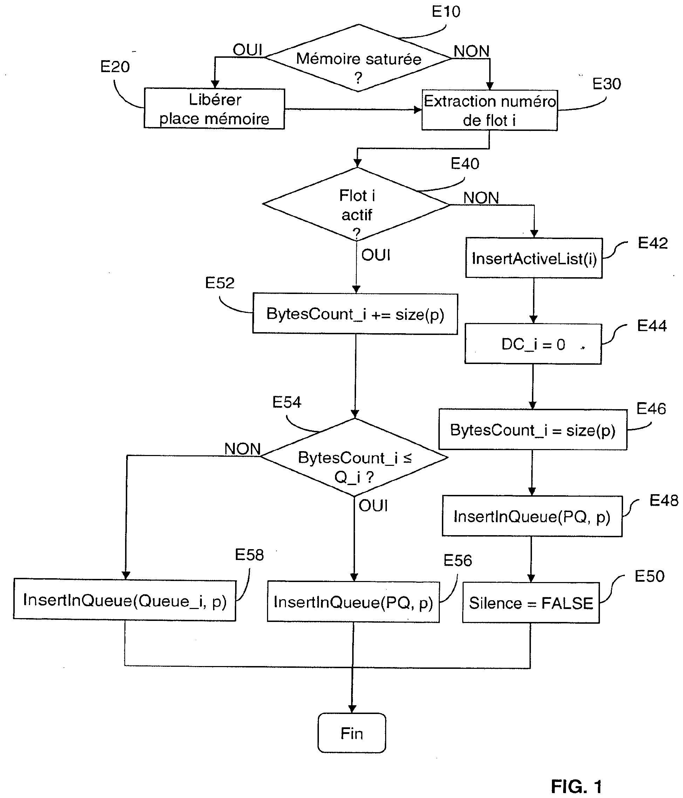

Nous allons maintenant décrire, en référence à la **figure 1,** les principales étapes de l'opérateur de mise en file Enqueue().

Sur réception d'un paquet p, l'opérateur de mise en file Enqueue() met en oeuvre une première étape E10 au cours de laquelle il teste si la zone de mémoire tampon (« buffer zone » an anglais) dans laquelle sont mémorisés les paquets de tous les flots actifs est saturée ou non ;
Si la mémoire tampon est saturée, le résultat du test E10 est positif.

Ce test est alors suivi par une étape E20 au cours de laquelle on libère de la place mémoire en rejetant le paquet situé à la tête de la file d'attente Queue_i la plus longue, ceci par appel à la fonction FreeBuffer() précitée.

L'étape E20 de libération mémoire est suivie par une étape E30, au cours de laquelle on obtient le numéro i du flot auquel appartient le paquet p.

En revanche, si la liste de flots actifs ActiveList n'est pas pleine, le résultat du test E10, précédemment décrit, est négatif. Ce test est alors suivi par l'étape E30 d'obtention décrite ci-dessus.

L'étape E30 d'obtention de l'indice de flot est suivie par un test E40, au cours duquel on vérifie si le flot i du paquet p est actif, ce qui revient à vérifier si le flot i est contenu dans la liste de flots actifs ActiveList.

Lorsque tel n'est pas le cas, le résultat du test E40 est négatif. Ce test est alors suivi par une étape E42, au cours de laquelle on insère le flot i dans la liste de flots actifs ActiveList par appel à la fonction InsertActiveList() précitée.

Cette étape E42 d'insertion est suivie par une étape E44, au cours de laquelle on initialise à 0 un compteur de déficit DC_i de la file d'attente Queue_i associée au flot actif i.

Ce compteur de déficit DC_i, est similaire à celui de la méthode d'ordonnancement DRR connue de l'homme du métier.

Conformément à l'invention, chaque flot nouvellement reçu peut émettre, par cycle, des données en priorité à hauteur de son quota Q_i.

A cet effet, l'étape E44 d'initialisation est suivie par une étape E46, au cours de laquelle on mémorise dans une variable BytesCount_i, la taille size(p) du paquet p, cette variable BytesCount_i, étant utilisée pour mémoriser le nombre d'octets des paquets du flot i à traiter avec priorité.

Cette étape E46 d'affectation est suivie par une étape E48, au cours de laquelle on ajoute le paquet p à la fin de la file prioritaire PQ, en utilisant la fonction InsertInQueue() d'insertion d'un paquet en fin d'une file d'attente.

Cette étape E48 de mise en file est suivie par une étape E50, au cours de laquelle on initialise une variable Silence avec une valeur booléenne FALSE afin de mémoriser le fait qu'au moins un paquet p est prêt à être émis.

Comme décrit ultérieurement, cet indicateur Silence est utilisé pour mesurer le débit équitable en cas d'absence de trafic, l'état d'absence de trafic étant représenté par le fait que l'identificateur égale la valeur booléenne TRUE.

Cette étape E50 termine le procédé de mise en file du paquet p dans ce mode de réalisation.

Lorsque le paquet p en cours de traitement est le paquet d'un flot i actif, le résultat du test E40 décrit précédemment est positif.

Ce test est alors suivi par une étape E52, au cours de laquelle on ajoute, au contenu de la variable précitée BytesCount_i, la taille du paquet p, cette variable BytesCount_i étant utilisée pour mémoriser le nombre d'octets des paquets du flot i à traiter avec priorité.

Cette étape de cumul est suivie par un test E54, au cours duquel on vérifie si le nombre d'octets du flot i du paquet p à traiter en priorité (à savoir BytesCount_i) est inférieur ou égal au quota Q_i de la file d'attente Queue_i réservée à ce flot.

Si tel est le cas, le résultat du test E54 est positif. Ce test est alors suivi par une étape de mise en file E56, similaire à l'étape de mise en file E48, déjà décrite, au cours de laquelle on ajoute le paquet p à la fin de la file prioritaire PQ.

En revanche, si le nombre d'octets BytesCount_i à traiter avec priorité pour le flot i excède le quota Q_i pour ce cycle, le résultat du test E54 est négatif. Ce test est alors suivi par une étape E58 de mise en file du paquet p dans la file normale, c'est-à-dire non prioritaire, Queue_i réservée à ce flot i.

Les étapes E56 et E58 de mise en file terminent le procédé de mise en file de ce mode particulier de réalisation.

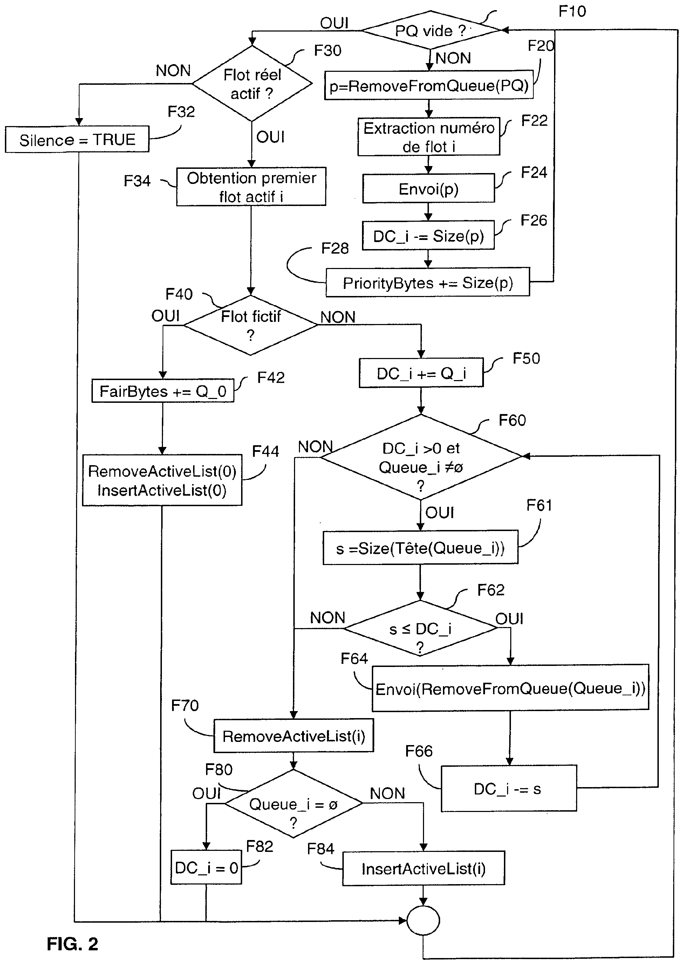

Nous allons maintenant décrire, en référence à la **figure 2,** les principales étapes de l'opérateur d'extraction de file Dequeue().

Cet opérateur Dequeue() de fin de traitement d'un paquet est mis en œuvre :

- à la fin de chaque opération d'envoi d'un paquet p ; et
- suite à l'arrivée d'un paquet lorsque le système est vide, cette deuxième condition étant remplie lorsque chaque file d'attente Queue_i, pour i variant de 1 à n, est vide et la file PQ est vide.

Dans l'exemple de réalisation décrit ici, cet opérateur Dequeue() est réalisé sous la forme d'une boucle sans fin, constituée par les étapes F10 à F84 qui vont maintenant être décrites.

Au cours d'une première étape F10, on vérifie si la file prioritaire PQ est vide. Si tel n'est pas le cas, ce test F10 est suivi par une étape F20, au cours de laquelle on extrait le paquet p en tête de liste de la file prioritaire PQ.

Cette opération s'effectue en utilisant la fonction RemoveFromQueue() adaptée à retourner un élément en tête d'une file d'attente.

Cette étape F20 d'extraction est suivie par une étape F22, similaire à l'étape E30 déjà décrite en référence à la figure 1, d'obtention du numéro de flot i de ce paquet p.

Cette étape F22 d'obtention est suivie par une étape F24 au cours de laquelle on émet le paquet p.

Cette étape d'envoi F24 est suivie par une étape F26, au cours de laquelle on soustrait, au compteur de déficit DC_i de la file d'attente Queue_i associée au flot i du paquet p retiré de la file prioritaire PQ à l'étape F20, la taille size(p) de ce paquet p.

Cette étape F26 de soustraction est suivie par une étape F28, au cours de laquelle on ajoute la taille du paquet p au contenu d'une variable PB, cette variable PB étant utilisée pour mémoriser le volume du trafic à traiter avec priorité.

Cette étape de cumul F28 est suivie par le test F10 déjà décrit, au cours duquel on vérifie si la file prioritaire PQ est vide. Ainsi, les étapes F10 à F28 constituent une boucle qui se prolonge tant qu'il y a des paquets présents dans la file prioritaire PQ.

Au cours de cette boucle, les compteurs de déficit DC_i associés aux flots i dont les paquets ont été émis en priorité sont décrémentés afin d'empêcher chacun des flots de dépasser son quota Q_i dans le cycle courant.

Lorsque la file prioritaire PQ est vide, le résultat du test F10 est positif. Ce test est alors suivi par un test F30, au cours duquel on vérifie si au moins un flot réel est actif.

Dans le mode de réalisation décrit ici, cela revient à vérifier que la liste de flots actifs ActiveList contient plus d'un élément, cette liste contenant de toute façon le flot fictif 0 utilisé pour la mesure du débit équitable.

Lorsque tel n'est pas le cas, le résultat de ce test F30 est négatif. Ce test est alors suivi par une étape F32 au cours de laquelle on affecte à la variable Silence, décrite précédemment à l'étape E50 de la figure 1, la constante booléenne TRUE, afin de représenter le fait qu'il n'y a plus aucun paquet à émettre, que ce soit dans la file prioritaire PQ ou dans l'une de ses files d'attente non prioritaires Queue_i.

Cette étape d'affectation F32 est suivie par l'étape F10 déjà décrite, au cours de laquelle on teste si la file prioritaire PQ est vide ou non.

Lorsqu'au moins un flot réel est actif, le résultat du test F30 est positif. Ce test est alors suivi par une étape F34, au cours de laquelle on obtient l'identificateur du flot i en tête de la liste des flots actifs ActiveList.

Cette étape d'obtention F34 est suivie par un ensemble d'étapes F40 à F44, destiné à mesurer le volume d'octets FB qu'aurait pu émettre le flot fictif 0, ce volume FB servant, comme décrit ultérieurement, à estimer le débit équitable.

Plus précisément, au cours de l'étape F40, on teste si le flot obtenu en tête de la liste des flots ActiveList à l'étape précédente F34, est le flot fictif 0.

Si tel est le cas, le résultat du test F40 est positif. Ce test est alors suivi par une étape F42, au cours de laquelle on ajoute au volume FB le quota Q_0 alloué au flot fictif 0.

Cette étape de cumul F42 est suivie par une étape F44, au cours de laquelle on enlève la file fictive 0 de la tête du cycle pour la rajouter immédiatement à la fin du cycle en utilisant les opérations standard InsertActiveList() et RemoveActiveList() précitées.

Lorsque le flot actif i obtenu en test de la liste des flots actifs ActiveList, au cours de l'étape F34 est un flot réel, le résultat du test F40 est négatif.

Ce test est alors suivi par une étape F50, au cours de laquelle, on ajoute, à la valeur courante du compteur de déficit DC_i pour ce flot i, son quota Q_i.

Cette étape de cumul F50 est suivie par une série d'étapes F60 à F68 pour émettre les paquets du flot i jusqu'à hauteur de son quota Q_i.

Plus précisément, au cours d'un test F60, on vérifie que le compteur de déficit DC_i est strictement positif et que la file d'attente non prioritaire Queue_i est non vide.

Lorsque tel est le cas, le résultat du test F60 est positif. Ce test est alors suivi par une étape F61, au cours de laquelle on mémorise dans une variable s la taille du paquet en tête de la file d'attente Queue_i.

Cette étape F61 est suivie par un test F62 au cours duquel on vérifie si cette taille s est inférieure ou égale au compteur de déficit DC_i pour ce flot.

Lorsque tel est le cas, le résultat du test F62 est positif. Ce test est alors suivi par une étape F64, au cours de laquelle on envoie ce paquet, après l'avoir retiré de la file d'attente Queue_i par utilisation de la fonction RemoveFrom-Queue().

L'étape F64 d'envoi est suivie par une étape F66, au cours de laquelle on soustrait, du compteur de déficit DC_i, la taille s de ce paquet.

Cette étape de soustraction F66 est suivie par le test F60 déjà décrit, au cours duquel on vérifie que la file d'attente Queue_i associée au flot i est non vide et que le compteur de déficit DC_i pour cette file est strictement positif.

Lorsque tous les paquets du flot i ont été émis, jusqu'au quota DC_i autorisé, le résultat du test F60 ou du test F62 est négatif.

On retire alors, au cours d'une étape F70 le flot i de la liste des flots actifs ActiveList en utilisant l'opérateur RemoveActiveList, déjà mentionné.

Cette étape F70 de retrait est suivie par un test F80, au cours duquel on vérifie si la file d'attente Queue_i associée au flot i est vide.

Si tel est le cas, on initialise le compteur de déficit DC_i associé à ce flot i à 0, au cours d'une étape F82 d'initialisation.

Dans le cas contraire, on insère le flot i à la fin de la liste des flots actifs ActiveList, en utilisant la fonction InsertActiveList au cours d'une étape d'insertion F84.

Les étapes F82 d'initialisation du compteur de déficit DC_i et F84 d'insertion du flot i dans la liste des flots actifs ActiveList sont suivies par le test F10 déjà décrit.

L'homme du métier comprendra que, en pratique, la liste des flots actifs ActiveList doit être dimensionnée pour une faible probabilité de débordement.

Dans un mode particulier de réalisation, lorsqu'un paquet d'un nouveau flot est reçu et que la liste des flots actifs ActiveList est pleine, ce paquet est mis dans la file prioritaire PQ mais le flot auquel il appartient n'est pas rajouté à la liste des flots actifs ActiveList.

Ce paquet est alors envoyé (étape F24) mais les informations associées au flot auquel il appartient ne sont pas mises à jour.

Ainsi, les paquets auxquels s'applique le traitement d'exception sont prioritaires même si le débit de leur flot excède le débit équitable actuel.

Cette violation n'est pas gênante dans la mesure où la probabilité de rester dans cet état est très faible pour un flot à débit supérieur au débit équitable au fur et à mesure de l'arrivée des paquets.

Il est à noter que l'algorithme d'ordonnancement, selon l'invention, basé sur la méthode DRR connue est de complexité en O(1).

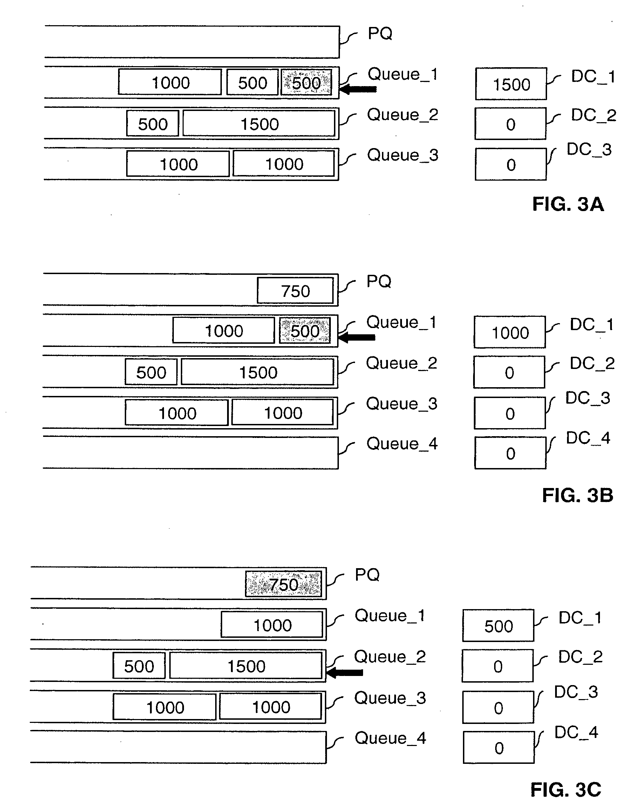

Les **figures 3A à 3F** illustrent un exemple de fonctionnement du procédé d'ordonnancement conforme à l'invention décrit précédemment, en référence aux figures 1 et 2.

On supposera ici que cette description commence avec l'hypothèse que trois files d'attente Queue_1, Queue_2, Queue_3 contiennent des paquets p des flots respectifs flot 1, flot 2, flot 3. La taille de ces paquets est reportée sur ces figures.

On supposera aussi qu'au début de ce scénario, la file prioritaire PQ est vide.

Enfin, la valeur du quota Q_i allouée à chaque flot i est supposée égale à 1 500.

Dans ces différentes figures, la flèche noire indique la tête de la liste des flots actifs dans le cycle, ce cycle suivant l'ordre des files non prioritaires suivant : Queue_1, Queue_2, Queue_3, Queue_4.

Le paquet en cours de service est grisé à chacune des différentes étapes.

Initialement, comme représenté **figure 3A,** le flot qui est en tête de liste est le flot 1 associé à la file d'attente Queue_1.

Son compteur de déficit DC_1 est augmenté par son quota Q_1, à savoir 1 500.

Le routeur 100 peut donc commencer à servir le premier paquet, grisé, de cette file d'attente Queue_1, la taille de ce paquet étant ici de 500 octets.

On suppose, en référence à la **figure 3B,** qu'un paquet appartenant à un nouveau flot 4, arrive pendant le service du paquet précédent.

Une file Queue_4 est créée et est associée à ce flot 4.

Contrairement à ce qui se passerait dans le cadre d'un ordonnancement de type DRR classique, ce paquet est ici inséré dans la file prioritaire PQ, comme décrit précédemment, en référence à l'étape E48.

Cependant, on poursuit le traitement du flot 1, la taille du deuxième paquet de la Queue_1, à savoir 500 octets, étant inférieure au nouveau déficit DC_1 (résultats des tests F60 et F62 positifs).

A l'étape représentée à la **figure 3C,** le traitement du flot 1 est achevé puisque le déficit DC_1 associé à la file d'attente Queue_1 égale 500, ce déficit étant inférieur à la taille 1 000 du prochain paquet (résultat du test F62 négatif).

Conformément à l'invention et, contrairement à ce qui se passerait dans le cadre d'un ordonnancement de type DRR classique, on sert la file prioritaire PQ (résultat du test F10 négatif), celle-ci contenant le paquet appartenant au flot 4 dont le déficit DC_4 est décrémenté (voir étape F66).

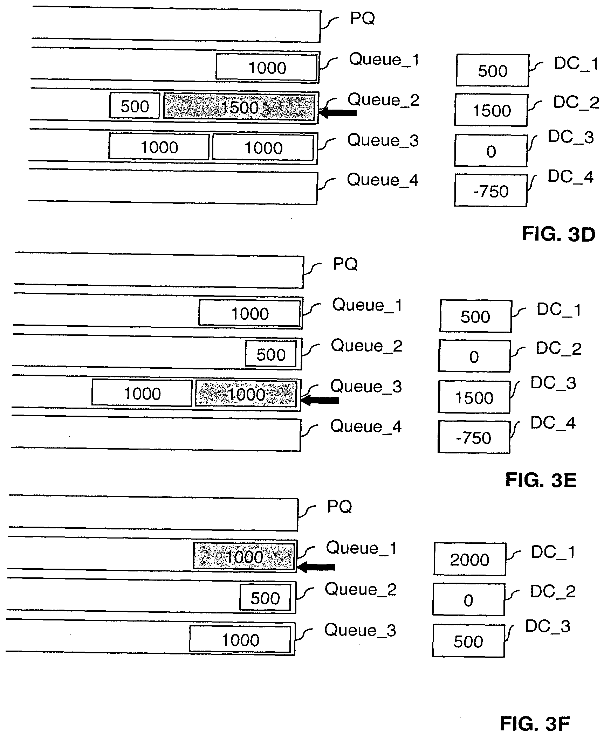

Au cours de l'étape suivante représentée à la **figure 3D,** la file prioritaire PQ étant devenue vide (test F10 positif), on traite le premier flot réel actif (test F30 positif), à savoir ici le flot 2, associé à la file d'attente Queue_2.

Au cours de l'étape suivante représentée à la **figure 3E,** on traite le flot suivant (flot 3) car la taille du paquet restant dans la file d'attente Queue_2 est supérieure au quota DC_2 associé à cette file d'attente (résultat du test F62 négatif).

La dernière étape représentée à la **figure 3F,** constitue le début d'un nouveau cycle où l'on recommence à servir le flot 1. Le flot 4 n'est plus actif car sa file Queue_4 est vide, il ne fait donc plus partie de ActiveList.

La **figure 4** représente un dispositif d'ordonnancement 100 conforme à l'invention dans un mode particulier de réalisation. Typiquement, ce dispositif d'ordonnancement peut être implémenté dans un routeur, ou dans un processeur ou microprocesseur pour un routeur.

De façon classique, ce dispositif reçoit des paquets p, qu'il ordonne en vue de leur émission, ou rejette en cas de débordement.

Sur cette figure 4, la référence 34 désigne le départ des paquets (étapes F24, F64) tandis que la référence 32 désigne le rejet des paquets (étape E20).

Ce dispositif d'ordonnancement 100, comporte un processeur 110, une mémoire morte 120, une mémoire vive 130, une horloge 140.

Le dispositif d'ordonnancement 100 comporte également des moyens matériels et logiciels de communication 150 constitués par exemple par une carte réseau reliée au réseau Internet 10 et par des couches logicielles adaptées à mettre en œuvre le protocole de communication TCP/IP.

Ces moyens de communication 150 sont notamment adaptés à recevoir un paquet p et à le mémoriser dans une zone 131 de la mémoire vive 130 et à lire un paquet p à partir de cette zone pour l'envoyer sur le réseau Internet 10.

De façon connue les différents matériels du dispositif d'ordonnancement 100 sont reliés entre eux par un système de bus 160.

Conformément à l'invention, la mémoire morte 120 comporte le programme d'ordonnancement PROG_ORD, et la mémoire vive 130 une structure de données 170 pour la mise en œuvre de ce programme d'ordonnancement PROG_ORD.

Cette structure de données 170 est représentée sous forme d'un tableau dont chaque ligne correspond chacune à une file d'attente Queue_i, associée à un flot i. Plus précisément, dans ce tableau :

- la première colonne mémorise l'indice i du flot ;
- la deuxième colonne mémorise l'identificateur du flot i ;
- la troisième colonne mémorise le quota Q_i de la file Queue_i ;
- la quatrième colonne mémorise le compteur de déficit DC_i de la file Queue_i ;
- la cinquième colonne permet de gérer le cycle des flots de la liste des flots actifs ActiveList en mémorisant l'indice de la file d'attente suivant la file Queue_i dans cette liste. La gestion de ces pointeurs permet, de façon connue, l'insertion et l'extraction de flots dans la liste des flots actifs ActiveList ; et
- la dernière colonne donne l'adresse de mémorisation du paquet en tête de la file d'attente Queue_i dans la mémoire vive 130. De façon connue, les paquets suivants dans la file d'attente Queue_i sont accessibles au moyen d'une liste de pointeurs chaînés.

Dans un mode particulier de réalisation, la vérification de l'activité d'un flot i est effectuée en comparant l'identificateur d'un flot au contenu de la deuxième colonne de la structure de données 170, par exemple en employant une mémoire CAM (Content Addressable Memory).

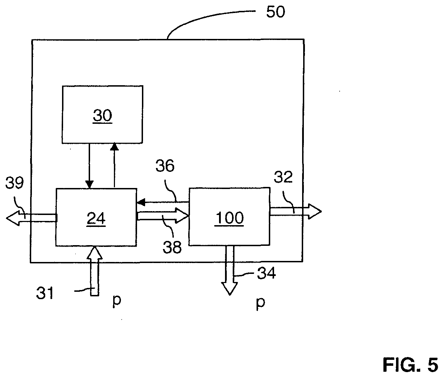

Nous allons maintenant décrire, en référence à la **figure 5,** un routeur 50 conforme à l'invention dans un mode particulier de réalisation.

Ce routeur 50 comporte un dispositif d'ordonnancement 100 identique ou similaire à celui décrit précédemment en référence à la figure 4.

Dans le mode particulier de réalisation décrit ici, ce routeur comporte en outre un module 24 de contrôle d'admission de chaque paquet p des flots entrants (flèche pleine référencée 31).

Les paquets p présentés à ce module sont, par exemple, déterminés par des fonctions d'acheminement classiques qui peuvent inclure un partage de charge, obtenu en appliquant une fonction « hash » à un sous-ensemble des champs de l'identificateur de flot.

Dans l'exemple de réalisation décrit ici, ce module 24 de contrôle d'admission effectue deux niveaux de contrôle pouvant être mis en œuvre indépendamment.

A cet effet, le module 24 de contrôle d'admission consulte et met à jour une liste 30 de flots dits « protégés », à savoir les flots, admis par le module 24 de contrôle d'admission, actifs (c'est-à-dire qu'un paquet de ce flot a été identifié depuis un intervalle de temps prédéterminé), et décide, sur la base de cette liste 30 de flots protégés, si les paquets d'un flot donné doivent être directement acheminés ou non, c'est-à-dire sans qu'il soit nécessaire de vérifier les conditions d'admission pour acheminer le paquet vers le dispositif d'ordonnancement.

Concrètement, cette liste de flots protégés 30 est une liste d'identificateurs de flots indiquant pour chacun d'entre eux, l'heure d'arrivée du dernier paquet.

Dans un mode particulier de réalisation, chaque liste est associée à une partition de l'espace des identificateurs, ceci afin de limiter les capacités de chaque liste et donc de garantir l'extensibilité.

Dans ce mode de réalisation, un flot est effacé de la liste d'identificateurs 30 lorsque le temps écoulé depuis le dernier paquet reçu pour ce flot, dépasse un seuil ou un intervalle de temporisation. La longueur de cet intervalle est un paramètre du système, par exemple de l'ordre de quelques secondes.

Dans un mode particulier de réalisation, cette liste 30 est dimensionnée de façon à limiter la probabilité de saturation, situation dans laquelle un flot devrait être mis dans la liste, alors que celle-ci est déjà pleine.

La conséquence d'une telle saturation serait qu'un flot tarderait à acquérir le statut de flot protégé. Ces paquets seraient néanmoins acheminés correctement si l'état de congestion le permet. De façon connue, la probabilité de saturation peut être rendue suffisamment faible par un dimensionnement adéquat.

Si le paquet appartient à un flot protégé, il est acheminé directement (flèche 38) vers le dispositif d'ordonnancement 100 correspondant à la bonne interface de sortie, l'heure d'arrivée du dernier paquet de ce flot protégé étant mise à jour dans la liste d'identificateurs 30.

Si le flot n'est pas déjà protégé, il faut procéder à une prise de décision d'acheminement, cette décision étant prise sur la base de conditions d'admission reçues du module d'ordonnancement.

Conformément à l'invention, une autre fonction détermine les conditions d'admission à partir de mesures de congestion effectuées par le dispositif d'ordonnancement 100. La fourniture de ces conditions est matérialisée par la flèche référencée 36 sur la figure 5.

Dans un mode particulier de réalisation, on utilise deux estimateurs de congestion, le débit équitable DE et la charge prioritaire CP :

- le débit équitable est une mesure du débit que réaliserait un flot de données qui aurait, en permanence, des paquets à émettre ; et
- la charge prioritaire est la somme de la longueur des paquets prioritaires transmis dans un certain intervalle, divisée par la durée de cet intervalle.

En effectuant des mesures périodiques, on obtient un comptage en continu de l'état de charge du lien contrôlé. La période des mesures est typiquement différente pour les deux valeurs de débit équitable (par exemple, de l'ordre de la centaine de millisecondes) et de charge prioritaire (par exemple, de l'ordre de la dizaine de millisecondes).

Dans le mode particulier de réalisation de l'invention décrit ici, ces estimateurs de congestion, CP et DE sont calculés par un processus de mesure distinct du procédé d'ordonnancement décrit ci-dessus à partir des compteurs de congestion PB et FB régulièrement mis à jour par le procédé d'ordonnancement aux étapes F28 et F42.

Par ailleurs, le processus de mesure (ou un autre module) comporte des moyens, non détaillés ici, adaptés à mesurer le temps total Silence_Time, pendant lequel la variable logique Silence est égale à la valeur booléenne TRUE, étant rappelé que cette variable Silence est mise à la valeur TRUE à l'étape F32 et à la valeur FALSE, à l'étape E50.

En échantillonnant le compteur de congestion PB à intervalles réguliers, le processus de mesure déduit une estimation de la charge prioritaire, comme la différence entre les valeurs PB mesurées au début et à la fin de l'intervalle de mesure, divisée par la durée de cet intervalle.

Soit :

- PB(T) la valeur, en octets, de PB à l'instant T ;
- (T1, T2) un intervalle de mesure (en secondes) ; et
- C le débit du lien (en bits/seconde), alors, un estimateur de charge prioritaire CP pour cet intervalle est :

$$CP(T1, T2) = (PB(T2) - PB(T1)) \times 8 / (T2 - T1) / C.$$

Conformément à l'invention, on suppose, pour estimer le débit équitable DE, que le flot fictif 0 émet continuellement des paquets de taille fixe égale à Q_0 (quota associé au flot fictif 0).

Dans une période où la file prioritaire est constamment occupée, le nombre d'octets qu'aurait pu émettre le flot fictif 0 se déduit de l'évolution du compteur de congestion FB. Lorsque la file est vide, le flot fictif 0 aurait pu émettre, au débit C du lien.

En conjuguant la succession de périodes d'activité et de silence, on déduit une estimation du débit équitable DE de la manière suivante, soit

- FB (T) la valeur, en octets, de FB à l'instant T ;
- (T1, T2) un intervalle de mesure ; et
- Silence_Time la durée totale de silence pendant l'intervalle (T1, T2), on obtient :

$$DE(T1, T2) = \max(Silence\_Time \times C / (T2-T1), (FB(T2)-FB(T1)) \times 8 / (T2-T1)).$$

L'homme du métier comprendra aisément, que dans le calcul du débit équitable DE, le premier terme prévaut, lorsque la charge du lien est faible (car le flot fictif 0 aurait utilisé toute la capacité du lien restant disponible), le deuxième terme prévalant en période d'activité, ce terme mesurant approximativement le débit réalisé par un flot réel qui a toujours au moins un paquet dans la file d'attente qui lui est associée.

Le module d'ordonnancement 100 détermine ensuite une condition d'admission à partir des estimateurs de congestion CP (charge prioritaire) et DE (débit équitable). En pratique, cette détermination peut être effectuée en utilisant une fonction Admit(CP, DE) dont le résultat égale 1 (respectivement 0), lorsque les paquets p de nouveaux flots, n'ayant pas encore le statut de flot protégé, doivent être acheminés (respectivement rejetés), le résultat de cette fonction d'admission étant fourni (flèche 36) par le module d'ordonnancement 100 au module d'acheminement 24.

Lorsque les conditions d'admission sont favorables, le nouveau flot dont le paquet est acheminé, est inséré dans la liste des flots protégés et acquière ainsi le statut de flot protégé.

Sur cette figure, la flèche pleine 39 représente le rejet des premiers paquets des nouveaux flots par le module d'acheminement 24.

Sur cette figure, la flèche pleine 38 représente l'acheminement des paquets des flots protégés vers le module d'ordonnancement 100.

Les conditions appliquées peuvent dépendre d'attribut particulier du paquet dont la valeur du champ « classe de trafic » en IPv6 ou le champ ToS en IPv4 ou des adresses IP source et destination.

Le contrôle d'admission permet d'assurer la transparence des flots admis : conservation du signal pour les flots temps réel, conservation du débit pour les flots de données.

En fait, cette transparence n'est offerte qu'aux flots dont le débit crête (déterminé par les limitations externes) reste inférieur à un certain seuil.

Pour choisir des seuils d'admission relatifs au débit équitable et à la charge prioritaire permettant de réaliser un contrôle d'admission permettant d'assurer la transparence des flots, l'homme du métier pourra se reporter au document FR2854296 de la Demanderesse précédemment cité.

Dans la description qui précède, le processus de mesure et le procédé d'ordonnancement sont distincts l'un de l'autre. En variante, le processus de mesure peut être intégré au procédé d'ordonnancement.

**Revendications**

1.  Procédé d'ordonnancement de paquets appartenant à différents flots (i), une file d'attente (Queue_i) étant associée à chacun desdits flots, ce procédé comportant, sur réception d'un paquet (p) :

    - la détermination du flot (i) auquel appartient le paquet (p) ;
    - une étape (E40, E54) de détermination de la priorité dudit paquet (p), un paquet étant considéré comme prioritaire lorsque :

        • ledit paquet est le premier paquet d'un flot non actif, un flot étant considéré comme non actif lorsqu'aucun paquet de ce flot n'a été reçu dans un cycle courant, ou
        • ledit paquet est l'un des paquets d'un flot actif (i), un flot étant considéré comme actif après la réception d'un premier paquet appartenant à ce flot et jusqu'à ce que la file d'attente (Queue_i) associée à ce flot soit vide, tant que le nombre d'octets de ce flot (i) reçus au cours du cycle courant est inférieur à un quota (Q_i) associé au flot (i) pour ce cycle courant ; et

        - si ledit paquet (p) est déterminé comme étant non prioritaire, une étape (E58) de mise en file de ce paquet (p) dans la file d'attente (Queue_i) ;

    ledit procédé comprenant en outre l'émission de paquets au cours dudit cycle dans l'ordre suivant :

        - les files d'attente sont traitées cycliquement, le traitement d'une file d'attente (Queue_i) consistant à émettre des paquets contenus dans cette file jusqu'à hauteur dudit quota (Q_i), et
        - les paquets prioritaires sont émis en priorité par rapport aux paquets contenus dans les files d'attente.

2.  Procédé d'ordonnancement selon la revendication 1, **caractérisé en ce qu'**il comporte en outre une étape (F28, F42) de mesure de compteurs (FB, PB) de congestion destinés à être traités pour le calcul d'estimateurs (CP, DE) de congestion utilisés pour un contrôle d'admission.

3.  Procédé d'ordonnancement selon la revendication 2, **caractérisé en ce que** lesdits paramètres de congestion sont constitués par :

    - une valeur (DE) de débit équitable, qui est une mesure de débit que réaliserait un flot de données qui aurait toujours des paquets à émettre ; et
    - une valeur (CP) de charge prioritaire, correspondant au volume desdits paquets prioritaires, transmis pendant un intervalle de temps, divisé par la durée de cet intervalle.

4.  Dispositif d'ordonnancement de paquets appartenant à différents flots (i), une file d'attente (Queue_i) étant associée à chacun desdits flots, ce dispositif comportant, sur réception d'un paquet (p) :

    - des moyens pour déterminer le flot (i) auquel appartient le paquet (p) ;
    - des moyens de détermination de la priorité dudit paquet (p), un paquet étant considéré comme prioritaire lorsque :

• ledit paquet est le premier paquet d'un flot non actif, un flot étant considéré comme non actif lorsqu'aucun paquet de ce flot n'a été reçu dans un cycle courant, ou
• ledit paquet est l'un des paquets d'un flot actif (i), un flot étant considéré comme actif après la réception d'un premier paquet appartenant à ce flot et jusqu'à ce que ladite file d'attente (Queue_i) associée à ce flot soit vide, tant que le nombre d'octets de ce flot (i) reçus au cours du cycle courant est inférieur à un quota (Q_i) associé au flot (i) pour ce cycle courant ;

- des moyens de mise en file de ce paquet (p) dans la file d'attente (Queue_i) lorsque ledit paquet p est déterminé non prioritaire ; et
- des moyens pour émettre des paquets au cours dudit cycle dans l'ordre suivant :

- les files d'attente sont traitées cycliquement, le traitement d'une file d'attente (Queue_i) consistant à émettre des paquets contenus dans cette file jusqu'à hauteur dudit quota (Q_i), et
- les paquets prioritaires sont émis en priorité par rapport aux paquets contenus dans les files d'attente.

**5.** Dispositif d'ordonnancement selon la revendication 4, **caractérisé en ce qu'**il comporte en outre des moyens de mesure de compteurs (FB, PB) de congestion destinés à être traités pour le calcul d'estimateurs (CP, DE) de congestion utilisés pour un contrôle d'admission.

**6.** Dispositif d'ordonnancement selon la revendication 5, **caractérisé en ce que** lesdits paramètres de congestion sont constitués par :

- une valeur (DE) de débit équitable, qui est une mesure de débit que réaliserait un flot de données qui aurait toujours des paquets à émettre ; et
- une valeur (CP) de charge prioritaire, correspondant au volume desdits paquets prioritaires, transmis pendant un intervalle de temps, divisé par la durée de cet intervalle.

**7.** Routeur de paquets **caractérisé en ce qu'**il comporte un dispositif d'ordonnancement (100) selon la revendication 5 ou 6, et un module (24) de contrôle d'admission desdits paquets en fonction des paramètres de congestion mesurés par ledit dispositif d'ordonnancement.

**8.** Routeur selon la revendication 7, **caractérisé en ce que** ledit module d'admission est en outre adapté à acheminer directement les paquets appartenant à des flots dits protégés, à savoir les flots pour lesquels au moins un paquet a été reçu par ledit module d'admission depuis un intervalle de temps prédéterminé.

**9.** Programme d'ordinateur stocké sur un support d'informations, ledit programme comportant des instructions permettant la mise en œuvre d'un procédé d'ordonnancement selon l'une quelconque des revendications 1 à 3, lorsque ce programme est chargé et exécuté par un système informatique.

**10.** Support d'informations lisible par un système informatique, éventuellement totalement ou partiellement amovible, notamment CD-ROM ou support magnétique, tel un disque dur ou une disquette, ou support transmissible, tel un signal électrique ou optique, **caractérisé en ce qu'**il comporte des instructions d'un programme d'ordinateur permettant la mise en œuvre d'un procédé d'ordonnancement selon l'une quelconque des revendications 1 à 3, lorsque ce programme est chargé et exécuté par un système informatique.

**Patentansprüche**

**1.** Verfahren zum Ordnen von Paketen, die zu unterschiedlichen Strömen (i) gehören, wobei mit jedem der Ströme eine Warteschlange (Queue_i) assoziiert ist, wobei dieses Verfahren Folgendes umfasst, wenn ein Paket (p) empfangen wird:

- Bestimmen des Stroms (i), zu dem das Paket (p) gehört;
- einen Schritt (E40, E54) des Bestimmens des Vorrangs des Pakets (p), wobei ein Paket als vorrangig betrachtet wird, wenn:

• das Paket das erste Paket eines nicht aktiven Stroms ist, wobei ein Strom als nicht aktiv betrachtet wird, wenn während eines aktuellen Zyklus kein Paket dieses Stroms empfangen wurde, oder
• das Paket eines der Pakete eines aktiven Stroms (i) ist, wobei ein Strom als aktiv betrachtet wird, nachdem ein erstes Paket, das zu diesem Strom gehört, empfangen wurde und bis die mit diesem Strom assoziierte Warteschlange (Queue_i) leer ist, solange die Anzahl an Bytes dieses Stroms (i), die während des aktuellen Zyklus empfangen wird, kleiner als eine Quote (Q_i) ist, die für diesen aktuellen Zyklus mit dem Strom (i) assoziiert ist; und

- wenn bestimmt wird, dass das Paket (p) nicht vorrangig ist, einen Schritt (E58) des Einreihens dieses Pakets (p) in die Warteschlange (Queue_i);

wobei das Verfahren ferner das Senden von Paketen während des Zyklus in der folgenden Reihenfolge beinhaltet:

- die Warteschlangen werden zyklisch verarbeitet, wobei die Verarbeitung einer Warteschlange (Queue_i) darin besteht, in dieser Schlange enthaltene Pakete bis zu einer Höhe der Quote (Q_i) zu senden, und
- die vorrangigen Pakete werden in Bezug auf die in den Warteschlangen enthaltenen Pakete mit Vorrang gesendet.

2. Ordnungsverfahren nach Anspruch 1, **dadurch gekennzeichnet, dass** es ferner einen Schritt (F28, F42) des Messens von Überlastungszählern (FB, PB) umfasst, die dazu bestimmt sind, für die Berechnung von Überlastungsschätzfunktionen (CP, DE), die für eine Zugangskontrolle verwendet werden, verarbeitet zu werden.

3. Ordnungsverfahren nach Anspruch 2, **dadurch gekennzeichnet, dass** die Überlastungsparameter aus Folgendem bestehen:

- einem Wert (DE) einer angemessenen Rate, der ein Maß für eine Rate ist, die ein Datenstrom umsetzen würde, der ständig Pakete zu senden hätte; und
- einem Vorrangslastwert (CP), der der Menge der vorrangigen Pakete entspricht, die während eines Zeitintervalls übertragen werden, geteilt durch die Dauer dieses Intervalls.

4. Vorrichtung zum Ordnen von Paketen, die zu unterschiedlichen Strömen (i) gehören, wobei mit jedem der Ströme eine Warteschlange (Queue_i) assoziiert ist, wobei diese Vorrichtung Folgendes umfasst, wenn ein Paket (p) empfangen wird:

- Mittel zum Bestimmen des Stroms (i), zu dem das Paket (p) gehört;
- Mittel zum Bestimmen des Vorrangs des Pakets (p), wobei ein Paket als vorrangig betrachtet wird, wenn:

• das Paket das erste Paket eines nicht aktiven Stroms ist, wobei ein Strom als nicht aktiv betrachtet wird, wenn während eines aktuellen Zyklus kein Paket dieses Stroms empfangen wurde, oder
• das Paket eines der Pakete eines aktiven Stroms (i) ist, wobei ein Strom als aktiv betrachtet wird, nachdem ein erstes Paket, das zu diesem Strom gehört, empfangen wurde und bis die mit diesem Strom assoziierte Warteschlange (Queue_i) leer ist, solange die Anzahl an Bytes dieses Stroms (i), die während des aktuellen Zyklus empfangen wird, kleiner als eine Quote (Q_i) ist, die für diesen aktuellen Zyklus mit dem Strom (i) assoziiert ist;

- Mittel zum Einreihen dieses Pakets (p) in die Warteschlange (Queue_i), wenn das Paket p als nicht vorrangig bestimmt wird; und
- Mittel zum Senden von Paketen während des Zyklus in der folgenden Reihenfolge:

- die Warteschlangen werden zyklisch verarbeitet, wobei die Verarbeitung einer Warteschlange (Queue_i) darin besteht, in dieser Schlange enthaltene Pakete bis zu einer Höhe der Quote (Q_i) zu senden, und
- die vorrangigen Pakete werden in Bezug auf die in den Warteschlangen enthaltenen Pakete mit Vorrang gesendet.

5. Ordnungsvorrichtung nach Anspruch 4, **dadurch gekennzeichnet, dass** sie ferner Mittel zum Messen von Überlastungszählern (FB, PB) umfasst, die dazu bestimmt sind, für die Berechnung von Überlastungsschätzfunktionen (CP, DE), die für eine Zugangskontrolle verwendet werden, verarbeitet zu werden.

**6.** Ordnungsvorrichtung nach Anspruch 5, **dadurch gekennzeichnet, dass** die Überlastungsparameter aus Folgendem bestehen:

- einem Wert (DE) einer angemessenen Rate, der ein Maß für eine Rate ist, die ein Datenstrom umsetzen würde, der ständig Pakete zu senden hätte; und
- einem Vorrangslastwert (CP), der der Menge der vorrangigen Pakete entspricht, die während eines Zeitintervalls übertragen werden, geteilt durch die Dauer dieses Intervalls.

**7.** Paketrouter, **dadurch gekennzeichnet, dass** er eine Ordnungsvorrichtung (100) nach Anspruch 5 oder 6 und ein Modul (24) für die Zugangskontrolle der Pakete in Abhängigkeit von den durch die Ordnungsvorrichtung gemessenen Überlastungsparametern umfasst.

**8.** Router nach Anspruch 7, **dadurch gekennzeichnet, dass** das Zugangsmodul ferner dazu ausgelegt ist, diejenigen Pakete direkt weiterzuleiten, die zu sogenannten geschützten Strömen gehören, nämlich den Strömen, bei denen mindestens ein Paket seit einem vorgegebenen Zeitintervall durch das Zugangsmodul empfangen wurde.

**9.** Computerprogramm, das auf einem Informationsträger gespeichert ist, wobei das Programm Anweisungen zum Durchführen eines Ordnungsverfahrens nach einem der Ansprüche 1 bis 3 umfasst, wenn dieses Programm in ein Rechnersystem geladen und von diesem ausgeführt wird.

**10.** Durch ein Rechnersystem lesbarer Informationsträger, eventuell gänzlich oder teilweise entfernbar, insbesondere eine CD-ROM oder ein Magnetträger, wie etwa eine Festplatte oder eine Diskette, oder ein übertragbarer Träger, wie etwa ein elektrisches oder optisches Signal, **dadurch gekennzeichnet, dass** er Anweisungen eines Computerprogramms zum Durchführen eines Ordnungsverfahrens nach einem der Ansprüche 1 bis 3 umfasst, wenn dieses Programm in ein Rechnersystem geladen und von diesem ausgeführt wird.

**Claims**

**1.** Method for ordering packets belonging to various flows (i), a queue (Queue_i) being associated with each of said flows, this method including, when a packet (p) is received;

- the determination of the flow (i) to which the packet (p) belongs;
- a step (E40, E54) of determining the priority of said packet (p), a packet being considered to have priority when:

• said packet is the first packet of a non-active flow, a flow being considered non-active when no packet of this flow has been received in a current cycle, or
• said packet is one of the packets of an active flow (i), a flow being considered active after the reception of a first packet belonging to this flow and until the queue (Queue_i) associated with this flow is empty, as long as the number of bytes of this flow (i) received during the current cycle is less than a quota (Q_i) associated with the flow (i) for this current cycle; and

- if said packet (p) is determined to be a non-priority packet, a step (E58) of queuing of this packet (p) in the queue (Queue_i);

said method further comprising the transmission of packets during said cycle in the following order:

- the queues are processed cyclically, the processing of a queue (Q_i) consisting in transmitting packets contained in this queue to the limit of said quota (Q_i), and
- the priority packets are transmitted with priority over the packets contained in the queues.

**2.** Ordering method according to Claim 1, **characterized in that** it further includes a step (F28, F42) of measuring congestion counters (FB, PB) intended to be processed for the computation of congestion estimators (CP, DE) used for an admission control.

**3.** Ordering method according to Claim 2, **characterized in that** said congestion parameters consist of:

- an equitable bitrate value (DE), which is a measure of bitrate that a data flow which would still have packets to be transmitted would achieve; and
- a priority load value (CP), corresponding to the volume of said priority packets, transmitted during a time interval, divided by the duration of this interval.

4. Device for ordering packets belonging to various flows (i), a queue (Queue_i) being associated with each of said flows, this device including, when a packet (p) is received:

- means for determining the flow (i) to which the packet (p) belongs;
- means for determining the priority of said packet (p), a packet being considered to have priority when:

• said packet is the first packet of a non-active flow, a flow being considered non-active when no packet of this flow has been received in a current cycle, or
• said packet is one of the packets of an active flow (i), a flow being considered active after the reception of a first packet belonging to this flow and until said queue (Queue_i) associated with this flow is empty, as long as the number of bytes of this flow (i) received during the current cycle is less than a quota (Q_i) associated with the flow (i) for this current cycle;

- means for queuing this packet (p) in the queue (Queue_i) when said packet (p) is determined to be a non-priority packet; and
- means for transmitting packets during said cycle in the following order:

- the queues are processed cyclically, the processing of a queue (Queue_i) consisting in transmitting packets contained in this queue to the limit of said quota (Q_i), and
- the priority packets are transmitted with priority over the packets contained in the queues.

5. Ordering device according to Claim 4, **characterized in that** it furthermore includes means for measuring congestion counters (FB, PB) intended to be processed for the computation of congestion estimators (CP, DE) used for an admission control.

6. Ordering device according to Claim 5, **characterized in that** said congestion parameters consist of:

- an equitable bitrate value (DE), which is a measure of bitrate that a data flow which would still have packets to be transmitted would achieve; and
- a priority load value (CP), corresponding to the volume of said priority packets, transmitted during a time interval, divided by the duration of that interval.

7. Packet router **characterized in that** it includes an ordering device (100) according to Claim 5 or 6, and an admission control module (24) for said packets as a function of the congestion parameters measured by said ordering device.

8. Router according to Claim 7, **characterized in that** said admission module is furthermore adapted to directly route the packets belonging to so-called protected flows, namely the flows for which at least one packet has been received by said admission module since a predetermined time interval.

9. Computer program stored on an information medium, said program including instructions enabling the implementation of an ordering method according to any one of Claims 1 to 3, when this program is loaded and executed by a computer system.

10. Information medium readable by a computer system, optionally totally or partly removable, notably CD-ROM or magnetic medium, such as a hard disk or a diskette, or transmissible medium, such as an electrical or optical signal, **characterized in that** it includes instructions of a computer program enabling the implementation of an ordering method according to any one of Claims 1 to 3, when this program is loaded and executed by a computer system.

**FIG. 1**

**FIG. 2**

PQ

| 1000 | 500 | 500 | ← Queue_1

| 1500 | DC_1

| 500 | 1500 | Queue_2

| 0 | DC_2

| 1000 | 1000 | Queue_3

| 0 | DC_3

**FIG. 3A**

| 750 | PQ

| 1000 | 500 | ← Queue_1

| 1000 | DC_1

| 500 | 1500 | Queue_2

| 0 | DC_2

| 1000 | 1000 | Queue_3

| 0 | DC_3

| Queue_4

| 0 | DC_4

**FIG. 3B**

| 750 | PQ

| 1000 | Queue_1

| 500 | DC_1

| 500 | 1500 | ← Queue_2

| 0 | DC_2

| 1000 | 1000 | Queue_3

| 0 | DC_3

| Queue_4

| 0 | DC_4

**FIG. 3C**

PQ

| 1000 | Queue_1

| 500 | 1500 | Queue_2 ←

| 1000 | 1000 | Queue_3

Queue_4

| 500 | DC_1

| 1500 | DC_2

| 0 | DC_3

| -750 | DC_4

**FIG. 3D**

PQ

| 1000 | Queue_1

| 500 | Queue_2

| 1000 | 1000 | Queue_3 ←

Queue_4

| 500 | DC_1

| 0 | DC_2

| 1500 | DC_3

| -750 | DC_4

**FIG. 3E**

PQ

| 1000 | Queue_1 ←

| 500 | Queue_2

| 1000 | Queue_3

| 2000 | DC_1

| 0 | DC_2

| 500 | DC_3

**FIG. 3F**

EP 2 940 960 B1

| indice | Identité du flot | Q_i | DC_i | suivant | Adresse |
|--------|------------------|------|------|---------|------------|
| 1 | 1101011...101 | 1500 | 50 | 15 | 110100...011 |
| 2 | 0110001...100 | 1500 | 500 | 1 | 001001...100 |
| 3 | xxxxxxx...xxx | 1500 | 0 | | |
| ... | | | | | |
| n | 1000010...001 | 1500 | 0 | 46 | 011101...111 |

Queue_1

Queue_2

170

131

130

160

110

140

PROG_ORD

120

150

32

100

34

FIG. 4

p

10

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2854296


**Littérature non-brevet citée dans la description**

- **M. SHREEDHAR ; G. VARGHESE.** Efficient fair queuing using Déficit round robin. *IEEE/ACM Transactions on Networking,* Juin 1996, vol. 4 (3), 375-385

- Pre-Order Decifit Round Robin : a new scheduling algorithm for packet-switched networks. COMPUTER NETWORKS. ELSEVIER SCIENCE PUBLISHERS B.V, Février 2001, vol. 35
- **P. MCKENNEY.** Stochastic Fairness Queueing. *Internetworking : Research and Experience,* Janvier 1991, vol. 2, 113-131